Europäisches Patentamt

(19) European Patent Office

Office européen des brevets

(11) Publication number: **0 070 349**
**B1**

(12) **EUROPEAN PATENT SPECIFICATION**

(45) Date of publication of patent specification: **01.10.86**

(21) Application number: **81890121.7**

(22) Date of filing: **17.07.81**

(51) Int. Cl.⁴: **H 01 M 10/26,** H 01 M 10/02,
H 01 M 12/02, H 01 M 10/36

(54) **Electrolyte for electro-chemical cells.**

(43) Date of publication of application:
**26.01.83 Bulletin 83/04**

(45) Publication of the grant of the patent:
**01.10.86 Bulletin 86/40**

(84) Designated Contracting States:
**BE DE FR IT NL SE**

(56) References cited:
**FR-A-1 584 588**
**FR-A-2 002 644**
**FR-A-2 279 227**
**GB-A-2 010 574**
**US-A-3 440 099**
**US-A-3 905 833**
**US-A-4 247 610**

**CHEMICAL ABSTRACTS, vol. 94, 1981, page
183, abstract 142640y Columbus, Ohio, US G.B.
ADAMS et al.: "Rechargeable alkaline
zinc/ferricyanide battery"
Mellor's Modern Inorganic Chemistry, Ed.
Parkes, Longman Green & Co, London 1951.**

**The file contains technical information
submitted after the application was filed and
not included in this specification**

(73) Proprietor: **Julian, John D.H.**
**Flötzersteig 203**
**A-1140 Vienna (AT)**

(72) Inventor: **Julian, John D.H.**
**Flötzersteig 203**
**A-1140 Vienna (AT)**

(74) Representative: **Kliment, Peter, Dipl.-Ing.
Mag.-jur.
Singerstrasse 8
A-1010 Wien (AT)**

Courier Press, Leamington Spa, England.

## Description

This invention relates to current producing cells or electrical accumulators of various types. The electrolyte contains a complexing agent which reduces electrode solubility and improves electrolyte conductance.

In the continuing search for improved power sources considerable work has been done in investigating means for improving the performance of various electrochemical cells and storage batteries particularly in respect of size, weight and capacity. Important applications for these being in such fields as hearing aids, portable equipment, space and satelite applications and ultimately electrically driven non-poluting vehicles.

One aspect of this work has naturally been to investigate also the electrolyte used in such cells. Factors of interest here are conductance, current carrying capacity, corrosion effects on electrodes and other cell parts. These factors vary with the concentration of the electrolyte, temperature, solubility of the electrodes and additives. Other important considerations are rate of chemical reaction, charge transfer and in the case of many rechargeable cells, such problems as dendrite growth, deterioration of electrode structure, loss of capacity and resultant short serviceable life.

Various additives have been tested in electrochemical cells of different types and inorganic as well as organic additives as sometimes also used in the electroplating industry tried so as to combat dendrite growth, improve charge transfer and reduce internal resistance or to generally improve cell performance and life. Additives also have been added to electrode structures to help reduce loss of capacity, electrode poisoning effects or to improve electrolyte penetration further into the electrode structure to better utilise the available material.

Some references:

U.S. Patent 3.540.935 Keating Nutt El Du Pont Nov. 17, 1970. Sodium cyanide addition to prevent dendrites.

U.S. Patent 3.905.833 Louzos V. Demetrios Union Carbide Sept. 16, 1975. Cyanide and mercury corrosion inhibitors for zinc alkaline galvanic cells.

It is also known from U.K. Patent application 2 010 574 A (Adams B. George Lockheed Missiles and Space Company Inc. Dec. 5, 1978. Secondary redox Batteries) to use ferro- and ferri-cyanide salts as an electrochemical couple in a redox battery. According to this disclosure such salts are used in conjunction with an inert alkali-resistant cathode and a zinc anode in a redox battery with circulating alkaline anolyte and catholyte. The alkaline electrolyte in the vicinity of the cathode is saturated with an alkali metal ferricyanide salt which is alternately reduced and oxidised during charge and discharge of the battery.

For the main part, the modifications and additives so far used and proposed, have not shown adequate long term stability on continued recycling use in electrochemical cells as they tend to be oxidised rejected, or react irreversibly with the electrode or other cell parts, or are dissipated and lose their efficacity. The present invention solves many of the previously mentioned problems and in degree dependent upon the cell type, electrode structure and construction of cell in which the electrolyte is used, such a cell is improved in efficiency, performance and economic desireability.

The chemical reactions during charge and discharge of various electrochemical cells are not fully known and they are often a number of competing reaction schemes taking part. To one skilled in the art of electrochemical cell reactions, be it as applied to current-producing or rechargeable cells it is not essential to fully understand all details of the reaction taking part to make use of the invention. Furthermore the invention should of course be measured solely by means of the claims herein whereas the reactions taking part in a given electrochemical cell combination when using the electrolyte of this invention should not in any way be construed as defining or limiting the invention.

The electrolyte of this invention is particularly advantageous when used in pre-charged dry stored high capacity cells, in metal-air cells and in rechargeable cells such as silver-zinc (Ag-Zn), nickel-cadmium (Ni-Cd), nickel-zinc (Ni-Zn), nickel-iron (Ni-Fe), lead oxide (PbO) and metal-air cells and other cell systems.

In accordance with the invention, there is provided a current producing cell or an accumulator with an electrolyte which contains up to 4 g/100 ml of potassium or sodium ferro- or ferrocyanide as a conductivity-increasing and electrode solubility-reducing additive.

The constituent parts of the electrolyte of this invention and the optional initial additive of fluoride in suitable form can equally well be used in cells having different electrolytes, as also for the formation and activation of various electrodes prior to assembly into a cell. The electrolyte of this invention has in general improved conductivity, particularly at low temperatures, reducing cell internal resistance. Acting as a charge transfer medium, it increases cell potential and improves cell-stored capacity and efficiency by better utilization of the electrode electrochemical capacity. In the case of rechargeable cells it will in addition combat dendrite formation by attenuation of electrode solubility and alteration of electrode conditions. In cells of the silver-zinc type, cell degradation due to Ag migration to the zinc electrode is also greatly attenuated and recycling life considerably extended even without recourse to special separators.

The electrolyte may also contain a cyanide or a ferro- or ferricyanide compound. The metallic (Fe) link retains the (CN) and avoids loss during recycling the (Fe(CN)) complex actually taking part in charge transfer, improving electrolyte conductivity and lowering cell internal resistance.

Dependent upon cell type, electrodes and electrolyte composition, a reduction of the electrode solubility follows which reduces or eliminates effects such as shape change, loss of electrode capacity and dendrite growth.

In certain cases, particularly in rechargeable cells with zinc electrodes, an additional small addition of a suitable fluoride, NaF or KF is also advantageous, saturating the electrolyte with zincate ZnO can also be useful. The electrolyte of this invention provides the following improvements when used in electrochemical cells as prescribed. These a advantages are present in all aspects of the invention hereafter listed to a greater or lesser degree and will not be listed again separately in each example.

1) Lower internal cell resistance.
2) Better low temperature performance.
3) Higher output potential.
4) Better efficiency.
5) Better utilisation of electrode material.
6) Combatting of dendrite formation.
7) Longer cell life.

The electrolyte of this invention can be prepared as follows: potassium hydroxide (KOH) solution is prepared to a density of 1.12 g/ml 20°C (2.6 molar) 13 wt%, to this is then added potassium ferricyanide ($K_3Fe(CN)_6$) till a density of 1.14 to 1.2 g/ml is attained. Alternatively 15 grams of (KOH) granules 85% KOH and 4 grams of potassium ferricyanide ($K_3Fe(CN)_6$) can be dissolved per 100 ml of distilled water. The absolute ratios are not at all critical and in many cases even a very small amount of potassium ferricyanide added to an existing electrolyte of many cells is sufficient to improve performance considerably.

The electrolyte density used in various types of cells differs widely and is chosen to suit the particular operating temperatures and conditions as well as the cell components and electrodes concerned, the criteria for the choice of electrolyte composition or electrolyte additive, used as per this invention by any manufacturer for a given application or set of conditions may likewise vary and could well fall outside the preferred range here indicated as a guide. This in no way detracts from the value of the invention or the benefits claimed herein.

### Examples

1. In accordance with one aspect of this invention a normal silver-zinc (Ag-Zn) pre-charged dry stored cell is supplied with the electrolyte of this invention consisting of potassium hydroxide (KOH) solution of a density 1.12 g/ml 20°C to which is added potassium ferricyanide ($K_3Fe(CN)_6$) till a density of 1.14 g/ml is attained. The cell will provide a higher output have a lower internal resistance, give better efficiency and capacity.

2. In accordance with a further aspect of this invention a normal cell of the nickel-cadmium (Ni-Cd) type is provided with the electrolyte of this invention prepared as in example 1 above instead of its more conventional electrolyte of KOH or NaOH. The cell will similarly provide improved characteristics as well as a higher output level than usual for conventional cells. The extent of other improvements will depend upon details of the electrode and cell construction.

3. In accordance with a further aspect of this invention a cell of the normal nickel-iron (Ni-Fe) type is likewise improved by the use of the electrolyte.

4. In accordance with a further aspect of this invention a cell of metal-air type preferably of the zinc-air type is similarly improved by the use of the electrolyte of this invention.

5. In accordance with a further aspect of this invention a cell of the nickel-zinc (Ni-Zn) type is similarly improved by the use of the electrolyte.

6. In accordance with a further aspect of this invention a cell of the nickel-zinc (Ni-Zn) rechargeable type using the electrolyte of this invention will also have zincate ZnO added to the electrolyte and a very little fluoride KF or NaF and boron in the form of $Na_2B_4O_7$, $K_3BO_3$ or orthoboric acid $H_3BO_3$.

In a preferred embodiment of this invention the electrolyte of this invention is used in a nickel-cadmium (Ni-Cd) rechargeable cell of normal construction, the electrode structure of which can be of the pocket or the sintered or other type and with suitable separators. The electrolyte of this invention being made up as previously described of potassium hydroxide KOH to a density of 1.12 g/ml to which is added potassium ferricyanide ($K_3Fe(CN)_6$) to increase the density to around 1.14 to 1.18 g/ml. The absolute ratios are not at all critical as even a very small amount of ($K_3Fe(CN)_6$) added to an electrolyte is sufficient to considerably improve performance.

In another preferred embodiment of the invention the electrolyte is used in a nickel-zinc (Ni-Zn) cell of normal construction and can be composed as in the previous preferred embodiment of KOH solution to 1.12 g/ml to which is added potassium ferricyanide to bring the density to 1.14 to 1.18 g/ml. In the case of zinc based electrodes in rechargeable cells it has been found beneficial to add a small amount of potassium fluoride or sodium fluoride KF or NaF and boron in the form of $Na_2B_4O_7$, $K_3BO_2$ or orthoboric acid $H_3BO_3$ and to saturate the electrolyte with zincate ZnO so as to further arrest the solubility of the zinc electrode. The electrolyte of this invention is in no way limited to use with the above examples and can be used with other electrode systems and additives. Such additives are often used to modify electrode conductivity or overpotential or to reduce gassing and self discharge etc. some such examples being graphite, carbon, Ni, Pb, Mn, Mo, V, Ti, Zr, Hf, Nb, Hg. When using the electrolyte of this invention some such additives can to advantage be added in the form of a cyanide or ferro- or ferricyanide such as potassiumcyanomercurate ($K_2Hg(CN)_4$).

0

70349

**Claims**

1. A current producing cell or an accumulator comprising an electrolyte, characterized in that the electrolyte contains up to 4 grams per 100 ml of potassium or sodium ferro- or ferricyanide as a conductivity increasing and electrode solubility reducing additive.

2. The cell or accumulator of claim 1, wherein the electrolyte is alkaline.

3. The cell or accumulator of claim 1, wherein the electrolyte contains potassium or sodium hydroxide.

4. The cell or accumulator of claim 1, wherein the electrolyte also contains a cyanide or ferricyanide of the electrode materials of the cell.

5. The cell or accumulator of claim 1, wherein the electrolyte further contains a fluoride.

6. The cell or accumulator of claim 1, wherein the electrolyte further contains a borate or orthoboric acid.

7. The cell or accumulator of claim 1, wherein the electrolyte also contains potassiumcyanomercurate.

8. The cell or accumulator of claim 1, wherein the cell is a silver-cadmium, silver-zinc, nickel-cadmium, nickel-iron or nickel-zinc cell.

9. The cell or accumulator of claim 1, wherein the cell is a metal-air cell.

**Revendications**

1. Une pile de production de courant ou un accumulateur comprenant un électrolyte, caractérisée en ce que l'électrolyte contient jusqu'à 4 grammes pour 100 ml de ferrocyanure ou de ferricyanure de potassium ou de sodium servant d'additifs d'augmentation de conductivité et de réduction de solubilité d'électrode.

2. La pile ou accumulateur de la revendication 1, où l'électrolyte est alcalin.

3. La pile ou accumulateur de la revendication 1, où l'électrolyte contient de l'hydroxyde de potassium ou de sodium.

4. La pile ou accumulateur de la revendication 1, où l'électrolyte contient également un cyanure ou un ferricyanure des matières d'électrodes de la pile.

5. La pile ou accumulateur de la revendication 1, où l'électrolyte contient en outre un fluorure.

6. La pile ou accumulateur de la revendication 1, où l'électrolyte contient en outre un borate ou de l'acide orthoborique.

7. La pile ou accumulateur de la revendication 1, où l'électrolyte contient également du cyanure mercurate de potassium.

8. La pile ou accumulateur de la revendication 1, où la pile est une pile au cadmium-argent, au zinc-argent, au cadmium-nickel, au fer-nickel ou au zinc-nickel.

9. La pile ou accumulateur de la revendication 1, où la pile est une pile à métal-air.

**Patentansprüche**

1. Stromerzeugende Zelle oder Akkumulator, in der bzw. dem ein Elektrolyt vorhanden ist, dadurch gekennzeichnet, daß der Elektrolyt pro 100 ml bis zu 4 g Kalium- oder Natrium- ferro- oder ferricyanid als einen die Leitfähigkeit erhöhenden und die Elektrodenlöslichkeit herabsetzenden Zusatz enthält.

2. Zelle oder Akkumulator nach Anspruch 1, wobei der Elektrolyt alkalisch ist.

3. Zelle oder Akkumulator nach Anspruch 1, wobei der Elektrolyt Kalium- oder Natriumhydroxid enthält.

4. Zelle oder Akkumulator nach Anspruch 1, wobei der Elektrolyt auch ein Cyanid oder Ferricyanid von die Elektroden der Zelle bildenden Materialien enthält.

5. Zelle oder Akkumulator nach Anspruch 1, wobei der Elektrolyt außerdem ein Fluorid enthält.

6. Zelle oder Akkumulator nach Anspruch 1, wobei der Elektrolyt außerdem ein Borat oder Orthoborsäure enthält.

7. Zelle oder Akkumulator nach Anspruch 1, wobei der Elektrolyt auch Kaliumcyanomercurat enthält.

8. Zelle oder Akkumulator nach Anspruch 1, wobei die Zelle eine Silber-Kadmium-, Silber-Zink-, Nickel-Kadmium-, Nickel-Eisen- oder eine Nickel-Zink-Zelle ist.

9. Zelle oder Akkumulator nach Anspruch 1, wobei die Zelle eine Metall-Luft-Zelle ist.